# EUROPÄISCHE PATENTSCHRIFT

(11) **EP 0 402 642 B1**
(45) Veröffentlichungstag und Bekanntmachung des Hinweises auf die Patenterteilung: **01.09.1993**
(21) Anmeldenummer: 90109179.3
(22) Anmeldetag: 16.05.1990
(51) Int. Cl.: B60R 16/02

(54) **Vorrichtung und Verfahren zur Spannungsversorgung für einen Heizwiderstand**
Device and procedure for voltage supply of a heating resistor
Dispositif et procédé pour l'alimentation en tension d'une résistance chauffante

(30) Priorität: 15.06.1989 DE 3919562
(43) Veröffentlichungstag der Anmeldung: 19.12.1990
(73) Patentinhaber: ROBERT BOSCH GMBH, 70442 Stuttgart (DE)
(72) Erfinder: Frey, Wunibald, D-7141 Schwieberdingen (DE); Doege, Mathias, Dipl.-Ing., D-7015 Korntal-Münchingen (DE)

(56) Entgegenhaltungen:
- EP-A- 0 246 976
- DE-A- 2 705 049
- DE-A- 3 801 478
- FR-A- 2 405 159

## Beschreibung

### Stand der Technik

Die Erfindung geht aus von einer elektrischen Fahrzeugheizung nach der Gattung des Anspruchs 1 oder 2.

Zur Verbesserung der elektrischen Versorgung eines Heizwiderstandes, beispielsweise einer heizbaren Frontscheibe eines Kraftfahrzeugs sind verschiedene Möglichkeiten bekannt, die zur Erzielung einer möglichst hohen Heizleistung führen.

Beispielsweise ist bekannt, daß der Generator entweder das Bordnetz mit Spannung versorgt, wobei die Generatorausgangsspannung auf Bordnetzspannung geregelt wird, oder daß der Generator einen Heizwiderstand mit Spannung versorgt, wobei in diesem Fall zur Erzielung einer höheren Heizleistung, der Generator mit einer höheren Ausgangsspannung betrieben wird.

Da der Generator in diesem Fall ausschließlich zur Versorgung des Heizwiderstandes verwendet wird, steht eine hohe Leistung bereits bei geringer Generatordrehzahl zur Verfügung.

Da jedoch während des Heizbetriebes die Batterie sowie die Verbraucher vom Generator abgetrennt werden müssen, muß die Versorgung der Verbraucher mit elektrischer Energie aus der Batterie erfolgen, dies ist jedoch nur für eine relativ kurze Zeit möglich, da sich sonst die Batterie zu sehr entlädt. Daher kann diese Lösung im wesentlichen nur bei Fahrzeugstillstand vorgesehen werden. Eine Minimierung der Verbraucher zur Schonung der Batterie ist möglich.

Ein Heizen während des Fahrbetriebes wäre dann möglich, wenn die Generatorausgangsspannung auf Bordnetzspannung begrenzt würde, dies würde jedoch zu niedriger Leistung im Heizwiderstand führen.

Eine derartig ausgeführte Vorrichtung zum Heizen mit erhöhter Spannung über kurze Zeit und mit Bordnetzspannung über längere Zeit ist aus der DE-A- 27 05 049 bekannt. Dort wird ein Heizelement einmal direkt an den Generatorausgang angeschlossen und durch eine gegenüber der Bordnetzspannung deutlich erhöhte Generatorausgangsspannung versorgt, dabei ist jedoch das übrige Bordnetz vom Generator abgekoppelt. Dieser Schaltungszustand kann daher nur kurzfristig durchgeführt werden, da sich sonst die Batterie zu sehr entladen würde. Zur elektrischen Versorgung des Heizwiderstandes über längere Zeit ist gemäß dieser Druckschrift vorgesehen, durch einen Umschaltmechanismus den Heizwiderstand und die Batterie direkt an den Generatorausgang anzuschließen und für diesen Schaltzustand die Generatorausgangsspannung auf Bordnetzniveau zu begrenzen.

Eine Möglichkeit zur elektrischen Versorgung eines Heizwiderstandes mit erhöhter Spannung bei gleichzeitiger Mitversorgung von Verbrauchern mit normaler Bordnetzspannung ist aus der DE-PS 38 01 478 bekannt.

Dort wird ein Heizelement direkt an den Generatorausgang angeschlossen und mit der erhöhten Generatorspannung versorgt.

Die Bordnetzspannung für die übrigen Verbraucher wird dort aus der höheren Spannung mittels eines Konverters abgeleitet.

Eine ausreichende Versorgung ist jedoch aufgrund der erforderlichen Konverterauslegung auf ausreichende Lastströme nur schwer zu erreichen und ist außerdem kostenintensiv.

Aus der DE-A- 38 01 478 ist weiterhin bekannt, einen Heizwiderstand mit dem Bordnetz in Serie zu schalten und den Heizwiderstand bei normalem Betrieb, also wenn nicht geheizt werden soll, zu überbrücken.

Durch eine solche Serienschaltung kann der Generator auch während des Heizbetriebes die Bordnetzverbraucher bis zu einer bestimmten Größenordnung hin mitversorgen, es ist also ein Heizbetrieb mit hoher Leistung sowohl während des Fahrzeugstillstandes als auch während des Fahrbetriebes möglich.

Bei einer solchen elektrischen Versorgung eines Heizwiderstandes wird die Generatorausgangsspannung so geregelt, daß hinter dem Heizwiderstand Batteriespannungsniveau herrscht.

Nachteilig bei dieser Anordnung ist, daß der Generator den Heizwiderstand und das Bordnetz die insgesamt eine hohe Impedanz darstellen, mit Spannung versorgen muß, daher ist zur Erzielung einer angemessenen Heizleistung eine hohe Generatordrehzahl erforderlich. Im Leerlauf bzw. leicht angehobener Generatordrehzahl kann eine solche Anordnung keine ausreichende Heizleistung liefern.

### Vorteile der Erfindung

Die erfindungsgemäße Vorrichtung bzw. das Verfahren mit den Merkmalen des Anspruchs 1 bzw 2 hat gegenüber den bekannten Vorrichtungen zur elektrischen Versorgung eines Heizwiderstandes den Vorteil, daß die Versorgung an den jeweiligen Betriebszustand der Brennkraftmaschine angepaßt werden kann. Bei kleinen Drehzahlen sowie insbesondere bei Fahrzeugstillstand wird ausschließlich der Heizwiderstand vom Generator versorgt, bei Heizbetrieb während der Fahrt sind Bordnetz und Generator in Serie geschaltet, dadurch wird sowohl bei Fahrzeugstillstand als auch während der Fahrt eine ausreichende elektrische Versorgung eines Heizwiderstandes sichergestellt.

Weiterhin ist vorteilhaft, daß ein zentrales Steuergerät sämtliche wichtigen Daten bzw. Betriebszustände des Fahrzeugs erfaßt und damit für eine geeignete Generator-Erregung bzw. -Entregung sowie für optimales Umschalten sorgt.

Gegenüber den bekannten Lösungen ist lediglich ein geringer Mehraufwand, gegenüber der Lösung mit Spannungskonverter sogar ein stark reduzierter Aufwand nötig, um zu deutlich verbesserter elektrischer Versorgung des Heizwiderstandes zu gelangen.

### Zeichnung

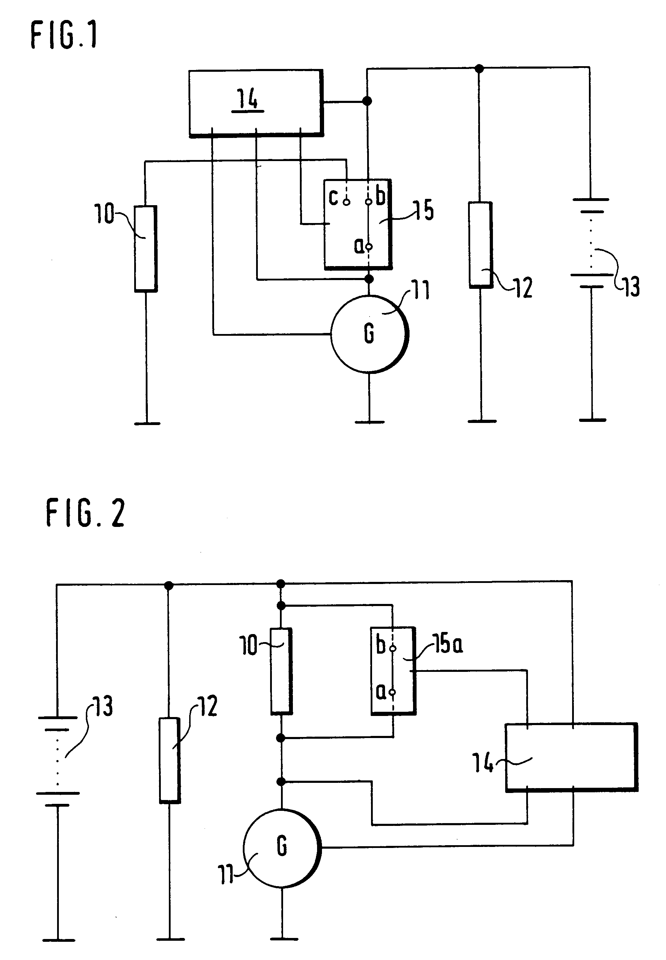

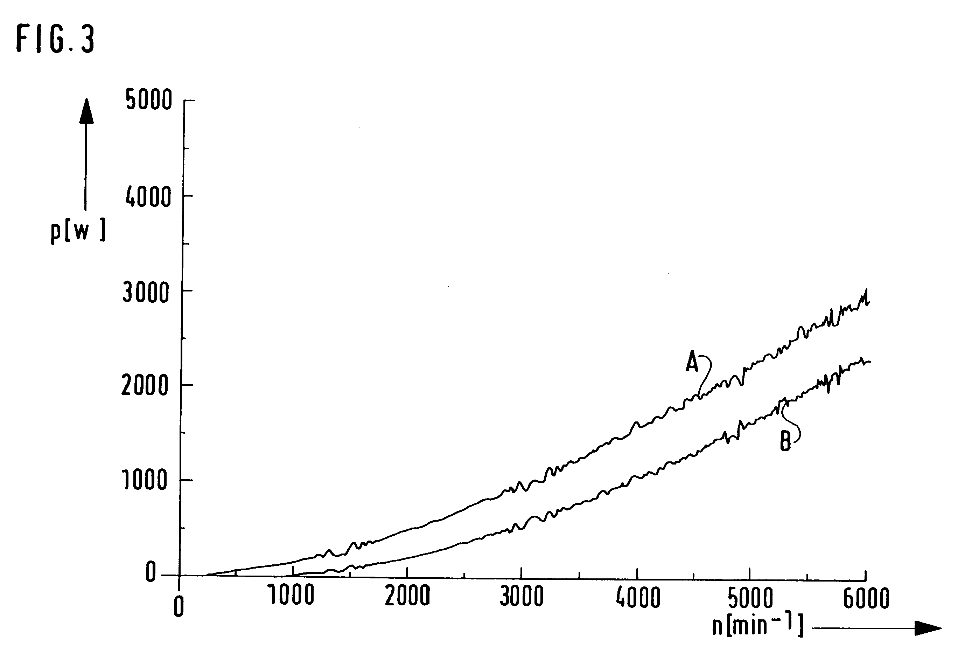

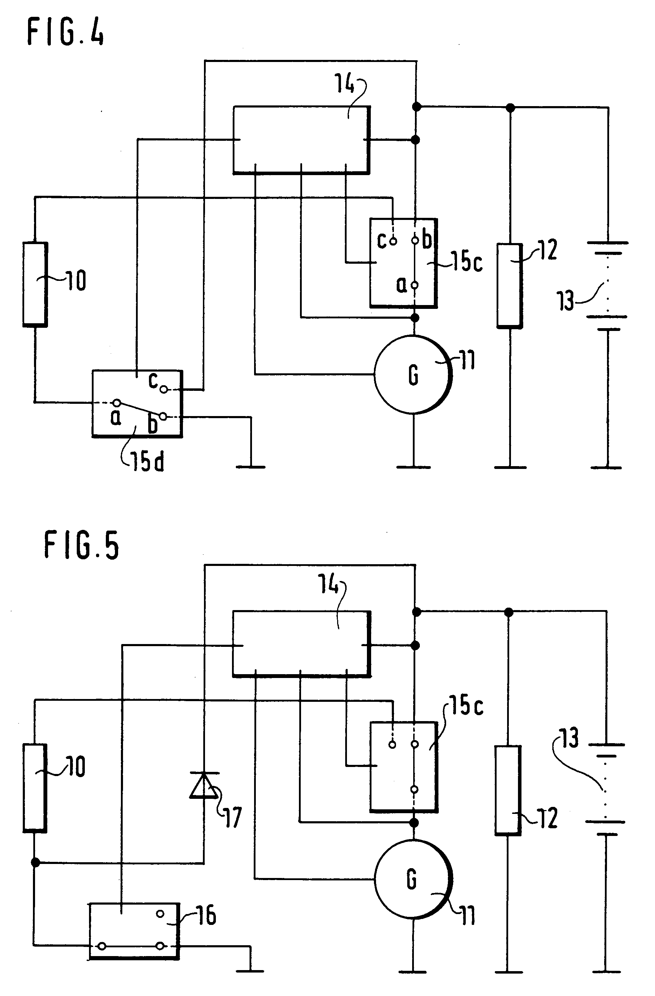

Zwei aus dem Stand der Technik bekannte Schaltungen zur elektrischen Versorgung eines Heizwiderstandes und zwei Ausführungsbeispiele der Erfindung sind in der Zeichnung dargestellt und werden in der folgenden Beschreibung näher beschrieben und erläutert. Dabei zeigt Figur 1 eine bekannte Schaltung, bei der der Heizwiderstand alternativ zum Bordnetz betrieben wird, Figur 2 eine bekannte Schaltung, bei der der Heizwiderstand in Serie zum Bordnetz liegt, in Figur 3 ist die Heizleistung über der Generatordrehzahl für die aus den Figuren 1 und 2 bekannten Schaltungen angegeben und in den Figuren 4 und 5 sind zwei Ausführungsbeispiele der Erfindung aufgezeigt, die kombinierte Lösungen der gemäß Figur 1 und 2 bekannten Schaltungen darstellen.

### Beschreibung der Ausführungsbeispiele

In Figur 1 ist eine herkömmliche Schaltungsanordnung zur elektrischen Versorgung eines Heizwiderstandes 10 dargestellt, mit einem Generator 11, einem Bordnetz 12, einer Batterie 13, einem Steuergerät 14 und einem Umschaltgerät 15. Dabei sind die Batterie 13 und das Bordnetz 12 parallel geschaltet und einerseits mit dem Generator 11 über das Umschaltgerät 15 und andererseits mit Masse verbunden. Das Umschaltgerät 15 ist weiterhin über den Heizwiderstand 10 mit Masse verbunden.

Weitere Verbindungen führen vom Steuergerät 14 zum Generator 11 bzw. Regler, zum Verbindungspunkt zwischen dem Umschaltgerät 15 und dem Generator 11, zum Umschaltgerät 15 und zum Verbindungspunkt zwischen dem Umschaltgerät 15 und dem Bordnetz oder zu einem geeigneten Punkt im Bordnetz. Das verwendete Umschaltgerät 15 hat drei Kontakte a, b, c, die Umschaltung erfolgt so, daß entweder die Verbindung a, b hergestellt und a, c unterbrochen ist oder daß a, c verbunden und a, b unterbrochen ist.

Der Generator 11 versorgt je nach Schalterstellung des Umschaltgeräts 15 entweder die Parallelschaltung aus Bordnetz 12 und Batterie 13 oder den Heizwiderstand 10 mit Spannung. Angesteuert wird das Umschaltgerät 15 über das Steuergerät 14. Dabei wird während des Heizbetriebes der Generator 11 mit freier Spannung betrieben, also ungeregelt mit gegenüber dem Bordnetz erhöhter Spannung. Dies ist jedoch nur während des Fahrzeugstillstandes bzw. während einer relativ kurzen Zeit möglich, da sonst die Batterie durch angeschlossene Verbraucher zu sehr entladen würde.

Soll das Bordnetz mit Spannung versorgt werden, wird mittels des Steuergeräts 14 und des Umschaltgeräts 15 die Verbindung zwischen dem Generator 11 und dem Bordnetz 12 bzw. der Batterie 13 hergestellt, während gleichzeitig die Verbindung zwischen dem Heizwiderstand 10 und dem Generator unterbrochen wird.

Figur 2 zeigt eine Schaltungsanordnung zur elektrischen Versorgung eines Heizwiderstandes 10, bei der der Heizwiderstand 10 in Serie zur Parallelschaltung aus Batterie 13 und Bordnetz 12 liegt, wobei diese Serienschaltung an den Generator 11 angeschlossen ist. Parallel zum Heizwiderstand 10 liegt ein Umschaltgerät 15a, das weiterhin mit einem Steuergerät 14 verbunden ist und dieses Steuergerät 14 einerseits mit dem Generator 11 bzw. Regler und andererseits mit dem Verbindungspunkt zwischen Heizwiderstand 10 und der Parallelschaltung von Bordnetz 12 und Batterie 13 oder einem geeigneten Punkt im Bordnetz verbunden ist. Ansonsten ist das Steuergerät 14 noch mit dem Verbindungspunkt zwischen dem Generator 11 und dem Heizwiderstand 10 verbunden.

Das Umschaltgerät 15a hat zwei Kontakte a, b, die je nach Schaltzustand miteinander verbunden oder unterbrochen sind.

Während des Heizbetriebes wird der Heizwiderstand 10 sowie das Bordnetz und die Batterie vom Generator mit Spannung versorgt, dabei wird die Generatorausgangsspannung so geregelt, daß an der Parallelschaltung von Batterie und Bordnetz die erforderliche Bordnetzspannung anliegt, die Generatorausgangsspannung ist also um die im Heizwiderstand abfallenden Spannung höher als die Bordnetzspannung. Der Schalter des Umschaltgerätes 15a ist dabei geöffnet.

Soll die Heizung unterbrochen werden, so wird über das Steuergerät 14 der Schalter im Umschaltgerat 15a umgelegt, wodurch der Heizwiderstand 10 überbrückt wird und die Generatorausgangsspannung direkt am Verbindungspunkt zwischen Batterie und Bordnetz anliegt. Dabei muß die Ausgangsspannung des Generators so heruntergeregelt werden, damit am Bordnetz 12 bzw. an der Batterie 13 die gewünschte Bord- netzspannung anliegt.

Bei genügend hoher Generatordrehzahl kann mit dieser Schaltungsanordnung sichergestellt werden, daß sowohl Batterie und Bordnetz als auch der Heizwiderstand ausreichend elektrisch versorgt werden. Bei geringer Generatordrehzahl ist dies jedoch nicht sichergestellt.

Figur 3 zeigt den Zusammenhang zwischen Heizleistung P und Generatordrehzahln. Dabei zeigt die Kurve A den Heizleistungsverlauf über der Generatordrehzahl für den Fall, daß ausschließlich der Heizwiderstand vom Generator versorgt wird. Kurve B zeigt den Verlauf der Heizleistung über der Generatordrehzahl für eine Serienschaltung des Heizwiderstandes mit der Parallelschaltung von Bordnetz 12 und Batterie 13, gemäß Figur 2.

Figur 4 zeigt ein erstes Ausführungsbeispiel der Erfindung. Dabei liegt die Parallelschaltung von Batterie 13 und Bordnetz 12 über ein erstes Umschaltgerät 15c das gleich aufgebaut ist wie das Umschaltgerät 15, am Generator 11. Das Umschaltgerät 15c ist weiterhin mit dem Heizwiderstand 10 verbunden, der seinerseits mit einem weiteren Umschaltgerät 15d, das wie 15, 15c aufgebaut ist, verbunden ist. Das Umschaltgerät 15d ist einerseits mit Masse verbunden und andererseits mit dem Verbindungspunkt zwischen Bordnetz 12 und Batterie 13 oder einem anderen Punkt im Bordnetz hinter dem Umschaltgerät 15c. Vom Steuergerät 14 führen Verbindungen zu den Umschaltgeräten 15c und 15d, zum Generator 11 bzw. Regler, zum Verbindungspunkt zwischen dem Generator 11 und dem Umschaltgerät 15c und zum Verbindungspunkt zwischen dem Umschaltgerät 15c und dem Bordnetz 12 bzw. der Batterie 13 oder einem geeigneten Punkt im Bordnetz.

Die in Figur 4 dargestellte Schaltungsanordnung arbeitet wie folgt: Bei Betrieb ohne Heizwiderstand wird das Bordnetz 12 mit der parallel geschalteten Batterie 13 über das Umschaltgerät 15c vom Generator 11 mit Spannung versorgt. Die Verbindung zwischen dem Generator 11 und dem Heizwiderstand 10 ist im Umschaltgerät 15c unterbrochen. Dabei liefert der Generator 11 die übliche Bordnetzspannung.

Soll auf Heizbetrieb umgeschaltet werden, wird im Steuergerät 14, das sämtliche wichtige Daten bzw. Betriebszustände wie Fahrzeug steht/fährt, Generatorspannung, Batteriespannung, Temperatur usw. erfaßt, eine Ansteuerung der Umschaltgeräte 15c bzw. 15d derart vorgenommen, daß,falls das Fahrzeug steht, die Verbindung zwischem dem Generator 11 und dem Bordnetz 12 bzw. der Batterie 13 im Umschaltgerät 15c unterbrochen wird und der Heizwiderstand 10 direkt vom Generator 11 mit Spannung versorgt wird. Dabei wird das Umschaltgerät 15d vom Steuergerät 14 so angesteuert, daß eine Verbindung zwischen dem Heizwiderstand 10 und Masse hergestellt wird.

Wird vom Steuergerät 14 dagegen erkannt, daß das Fahrzeug fährt, wird das Umschaltgerät 15c ebenfalls so angesteuert, daß eine Verbindung zwischen dem Heizwiderstand 10 und dem Generator 11 hergestellt wird, und gleichzeitig die Verbindung zwischen dem Generator 11 und dem Bordnetz 12 bzw. der Batterie 13 unterbrochen wird, jedoch wird das Umschaltggerät 15d in diesem Fall eine Verbindung zwischen dem Heizwiderstand 10 und dem Bordnetz 12 bzw. der Batterie 13 herstellen und gleichzeitig die Verbindung zwischen dem Heizwiderstand 10 und Masse unterbrechen.

Damit wird erreicht, daß bei stehendem Fahrzeug der Heizwiderstand 10 direkt vom Generator 11 mit Spannung versorgt wird, während in Fahrbetrieb der Heizwiderstand 10 und die Parallelschaltung aus Bordnetz 12 und Batterie 13 eine Serienschaltung bilden, die vom Generator 11 mit Spannung versorgt wird.

Die Spannungsregelung erfolgt so, daß bei Fahrzeugstillstand die Generatorausgangsspannung deutlich erhöht wird, beispielsweise auf 70 Volt und damit eine verbesserte Heizleistung im Heizwiderstand 10 erreicht wird. Während der Fahrt wird die Generatorausgangsspannung so geregelt, daß am Verbindungspunkt zwischen dem Heizwiderstand 10 und dem Bordnetz 12 bzw. der Batterie 13 die vorgeschriebene Bordnetzspannung von beispielsweise 14,6 V entsteht.

Die für die Spannungsregelung benötigte Generatorerregung bzw. Generatorentregung wird vom Steuergerät 14 durchgeführt.

Kann die erforderliche Bordnetzspannung in dem Betriebspunkt nicht erreicht werden, schaltet das Steuergerät 14 auf Normalbetrieb um.

Das in Figur 5 dargestellte zweite Ausführungsbeispiel weist prinzipiell denselben Aufbau auf, jedoch ist das Umschaltgerät 15d durch ein Einschaltgerät 16 ersetzt, gleichzeitig ist der Verbindungspunkt zwischen dem Heizwiderstand 10 und dem Einschaltgerät 16 über eine Diode 17 mit dem Bordnetz bzw. der Batterie verbunden. Die Polarität der Diode 17 ist so gewählt, daß die Diode 17 gegenüber der Batterie in Sperrichtung betrieben wird.

### Funktionsweise der Schaltungsanordnung nach Figur 5:

Bei Betrieb ohne Heizwiderstand wird das Bordnetz 12 bzw. die Batterie 13 über das Umschaltgerät 15c vom Generator 11 mit Spannung versorgt. Die Verbindung zwischen dem Generator 11 und dem Heizwiderstand 10 ist im Umschaltgerät 15c unterbrochen.

Soll der Heizwiderstand 10 in Betrieb genommen werden, wird das Umschaltgerät 15c vom Steuergerät so angesteuert, daß die Verbindung zwischen dem Generator 11 und dem Bordnetz 12 bzw. der Batterie 13 unterbrochen und die Verbindung zwischen dem Heizwiderstand 10 und den Generator 11 hergestellt wird. Weiterhin wird im Steuergerät 14 erkannt, ob das Fahrzeug steht oder fährt. Wenn das Fahrzeug steht wird das Einschaltgerät 16 vom Steuergerät 14 so angesteuert, daß eine Verbindung zwischen dem Heizwiderstand 10 und Masse hergestellt wird. Dadurch wird der Heizwiderstand 10 vom Generator 11 mit Spannung versorgt, während das Bordnetz bzw. die Batterie 13 vom Generator 11 abgekoppelt bleibt.

Wird im Steuergerät 14 erkannt, daß das Fahrzeug fährt, wird vom Steuergerät 14 das Einschaltgerät 16 so angesteuert, daß die Verbindung zwischen dem Heizwiderstand 10 und Masse unterbrochen wird. Der Heizwiderstand 10 liegt in diesem Fall über die Diode 17 mit dem Bordnetz 12 bzw. der Batterie 13 in Serie, der Generator 11 versorgt also den Heizwiderstand 10 und das Bordnetz 12 bzw. die Batterie 13 mit Spannung.

Die Regelung der Generatorausgangsspannung erfolgt analog zum Ausführungsbeispiel nach Figur 4 derart, daß bei Haltebetrieb im Fahrzeugstillstand, d.h. wenn das Bordnetz 12 bzw. die Batterie 13 vom Generator abgekoppelt sind, die Ausgangsspannung des Generators deutlich erhöht wird. Während der Fahrt, wenn der Heizwiderstand 10 und das Bordnetz 12 bzw. die Batterie 13 in Serie geschaltet sind, wird die Generatorausgangsspannung so geregelt, daß am Bordnetz 12 bzw. an der Batterie 13 die gewünschte Bordnetzspannung anliegt.

Die Diode 17 wirkt als Entkoppeldiode, sie soll verhindern, daß ein Strom von der Batterie durch den Heizwiderstand 10 in den Generator zurückfließt.

Durch die unterschiedliche Spannungsversorgung für den Heizwiderstand 10 während des Fahrzeugstillstands bzw. während der Fahrt, wird eine hohe Heizleistung sowohl im Leerlauf als auch bei hohen Drehzahlen sichergestellt. Die Einteilung in zwei Bereiche, nämlich Fahrzeugstillstand und Fahrt kann auch so erfolgen, daß unterhalb einer bestimmten Generatordrehzahl die Spannungsversorgung für den Heizwiderstand 10 direkt aus dem Generator, also wie im Fahrzeugstillstand erfolgt, während oberhalb einer bestimmten Generatordrehzahl eine Serienschaltung aus Heizwiderstand 10 und Bordnetz 12 bzw. Batterie 13 vorgesehen wird.

Die Um/Einschaltgeräte 15, 15a, c, d, 16 können mechanische Schalter, beispielsweise Relais oder elektrisch/elektronische, beispielsweise Halbleiterschalter sein.

Als Heizwiderstand kann eine Scheibenheizung vorgesehen sein) aber auch eine beliebige elektrische Wagenheizung zum Heizen des Kühlwassers oder direkt, beispielsweise über ein Gebläse, des Wageninneren.

## Patentansprüche

1. Vorrichtung zur Spannungsversorgung für einen Heizwiderstand (10) in einem Kraftfahrzeug mit einem Generator (11), einem Bordnetz (12) und einer Batterie (13), dadurch gekennzeichnet, daß ein Steuergerät (14), das wesentliche Betriebszustände erfaßt und auswertet, zur Ansteuerung von wenigstens zwei Um/Einschaltgeräten (15c, 15d, 16) vorgesehen ist, die bei Fahrzeugstillstand den Heizwiderstand mit dem Generator verbinden und die Verbindung zwischen dem Bordnetz (12) und dem Generator (11) unterbrechen und die während der Fahrt den Heizwiderstand (10), das Bordnetz (12) und den Generator (11) in Serie schalten.

2. Verfahren zur Spannungsversorgung für einen Heizwiderstand (10) in einem Kraftfahrzeug mit einem Generator (11), einem Bordnetz (12) und einer Batterie (13), dadurch gekennzeichnet, daß bei Fahrzeugstillstand nur der Heizwiderstand (10) vom Generator (11) mit Spannung versorgt wird, wobei die Generatorspannung höher ist als die Bordnetzspannung und daß während der Fahrt eine Reihenschaltung des Heizwiderstandes (10) mit dem Bordnetz (12) vom Generator (11) mit Spannung versorgt wird, wobei die Generatorspannung so geregelt wird, daß am Bordnetz (12) die gewünschte Bordnetzspannung anliegt.

3. Vorrichtung nach Anspruch 1, dadurch gekennzeichnet, daß die Umschaltgeräte als Relais ausgebildet sind.

4. Vorrichtung nach Anspruch 1, dadurch gekennzeichnet, daß die Umschaltgeräte elektronischer Art sind, vorzugsweise Halbleiterschalter.

5. Vorrichtung nach einem der vorhergehenden Ansprüche 1, 3 oder 4, dadurch gekennzeichnet, daß zwischen den Heizwiderstand (10) und das Bordnetz (12) eine Diode (17) geschaltet wird, wobei die Kathode der Diode (17) mit dem Pluspol der Batterie (13) verbunden wird.

## Claims

1. Device for supplying voltage for a heating resistor (10) in a motor vehicle having a generator (11), an on-board network (12) and a battery (13), characterised in that a controller (14), which detects and evaluates significant operating modes, is provided for driving at least two changeover/on-off switching apparatuses (15c, 15d, 16) which connect the heating resistor to the generator and interrupt the connection between the on-board network (12) and the generator (11) when the vehicle is stationary, and which connect the heating resistor (10), the on-board network (12) and the generator (11) in series when the vehicle is moving.

2. Method for supplying voltage for a heating resistor (10) in a motor vehicle having a generator (11), an on-board network (12) and a battery (13), characterised in that only the heating resistor (10) is supplied with voltage from the generator (11) when the vehicle is stationary, the generator voltage being higher than the on-board network voltage, and in that a series circuit comprising the heating resistor (10) and the on-board network (12) is supplied with voltage from the generator (11) when the vehicle is moving, the generator voltage being regulated such that the desired on-board network voltage is applied to the on-board network (12).

3. Device according to Claim 1, characterised in that the changeover switching apparatuses are constructed as relays.

4. Device according to Claim 1, characterised in that the changeover switching apparatuses are of an electronic type, preferably semiconductor switches.

5. Device according to one of the preceding claims 1, 3 or 4, characterised in that a diode (17) is connected between the heating resistor (10) and the on-board network (12), the cathode of the diode (17) being connected to the positive terminal of the battery (13).

## Revendications

1. Dispositif d'alimentation en tension d'une résistance chauffante (10) dans un véhicule automobile, comportant un générateur (11), un réseau de bord (12) et une batterie (13), dispositif caractérisé par un dispositif de commande (14) qui détecte les paramètres de fonctionnement importants et les exploite pour commander au moins deux dispositifs de commutation branchement/coupure (15c, 15d, 16) qui relient le générateur à la résistance lorsque le véhicule est à l'arrêt et coupent la liaison entre le réseau de bord (12) et le générateur (11) et qui branchent en série la résistance chauffante (10), le réseau de bord (12) et le générateur (11) lorsque le véhicule se déplace.

2. Procédé d'alimentation en tension d'une résistance chauffante (10) d'un véhicule automobile, comprenant un générateur (11), un réseau de bord (12) et une batterie (13), procédé caractérisé en ce que lorsque le véhicule est à l'arrêt, la résistance chauffante (10) est alimentée en tension par le générateur (11), la tension du générateur étant supérieure à la tension du réseau de bord et pendant le déplacement un montage en série, formé de la résistance chauffante (10) et du réseau de bord (12), est alimenté en tension par le générateur (11), la tension du générateur étant régulée pour que la tension de consigne du réseau de bord soit appliquée à ce réseau de bord (12).

3. Dispositif selon la revendication 1, caractérisé en ce que les dispositifs de commutation sont des relais.

4. Dispositif selon la revendication 1, caractérisé en ce que les dispositifs de commutation sont de type électronique, de préférence des semiconducteurs de commutation.

5. Dispositif selon l'une quelconque des revendications précédentes 1, 3 ou 4, caractérisé en ce qu'entre la résistance chauffante (10) et le réseau de bord (12), il est prévu une diode (17), la cathode de la diode (17) étant reliée au pôle plus de la batterie (13).
